# FASCICULE DE BREVET EUROPEEN

(11) **EP 1 419 837 B1**
(45) Date de publication et mention de la délivrance du brevet: **21.01.2009**
(21) Numéro de dépôt: 03356152.3
(22) Date de dépôt: 14.10.2003
(51) Int. Cl.: B23B 31/12

(54) **Mandrin porte-outil à système de verrouillage**
Werkzeughalter mit Verriegelungssystem
Tool holder with locking system

(30) Priorité: 18.11.2002 FR 0214394
(43) Date de publication de la demande: 19.05.2004
(73) Titulaire: ETABLISSEMENTS AMYOT S.A., F-25300 Pontarlier (FR)
(72) Inventeur: Cachod, Yves Marie Marcel, 25270 Levier (FR); Simonin, Gérard Marie, 25650 Monflovin (FR)
(74) Mandataire: Maureau, Philippe

(56) Documents cités:
- EP-A- 1 055 472
- US-A- 5 741 016

## Description

La présente invention a pour objet un mandrin porte-outil pour l'équipement d'une machine tournante.

Plus précisément, la présente invention concerne un mandrin porte-outil destiné à équiper une perceuse.

Les mandrins porte-outil habituellement rencontrés comprennent un corps destiné à être fixé sur un arbre moteur de la machine, dans lequel sont montés plusieurs mors qui coulissent dans des alésages en convergeant vers l'avant et qui possèdent chacun une partie filetée tournée vers l'extérieur, une chemise étant montée pivotante sur le corps et possédant une paroi intérieure qui coopère avec un écrou lui-même en prise avec la partie extérieure filetée des mors.

Un exemple d'un tel mandrin porte-outil est notamment décrit dans le document EP-618 029 au nom de la Demanderesse.

Les mandrins porte-outil du type précité ont pour avantage de permettre un serrage d'un outil sans nécessiter la mise en oeuvre d'une clef, tout en évitant l'ouverture intempestive du mandrin durant des travaux de percussion notamment. Même si ces mandrins donnent entièrement satisfaction quant à leur fonctionnement, ils ont pour inconvénient d'intégrer un grand nombre de pièces constitutives. Ils sont donc d'un prix de revient élevé et nécessitent plusieurs opérations de montage.

La présente invention a notamment pour but de remédier aux inconvénients précités en fournissant un mandrin porte-outil dont le nombre de pièces constitutives est réduit pour simplifier le montage de ce mandrin.

A cet effet, selon l'invention, le mandrin porte-outil du type précité est essentiellement caractérisé en ce que le corps comprend, dans sa zone recouverte par l'écrou, une denture périphérique, et l'écrou porte des moyens de verrouillage qui sont destinés à être engagés dans la denture du corps en position serrée du mandrin, et qui sont destinés à être actionnés par la chemise, et en ce que la chemise possède un mouvement relatif angulaire par rapport aux moyens de verrouillage entre une position déverrouillée dans laquelle la chemise entraîne en rotation l'écrou et une position verrouillée dans laquelle le mandrin est dans sa position serrée.

Ainsi, grâce à ces dispositions, le mandrin porte-outil possède des moyens de verrouillage qui sont directement montés sur l'écrou et qui sont commandés par la chemise elle-même directement manipulée par l'opérateur.

Avantageusement, les moyens de verrouillage comprennent au moins une première lame ressort qui est montée fixe angulairement sur l'écrou et qui possède une extrémité libre faisant saillie au travers d'un évidement ménagé dans l'écrou pour atteindre, en position serrée du mandrin, la denture du corps.

Dans un mode préféré, les moyens de verrouillage comprennent au moins une deuxième lame ressort qui possède une extrémité libre munie d'un relief qui coopère respectivement dans les positions déverrouillée et verrouillée de la chemise, avec une première et une deuxième dépressions ménagée dans cette chemise.

Encore de manière préférée, les première et deuxième lames ressort sont solidaires d'un anneau porté par l'écrou et immobilisé en rotation sur cet écrou au moyen d'au moins deux pattes qui pénètrent dans des parties complémentaires ménagées dans l'écrou.

De préférence, la chemise comprend au moins une partie évidée dans laquelle l'extrémité libre de la première lame ressort est logée, dans la position déverrouillée de la chemise, pour dégager cette extrémité libre hors de la denture du corps.

Encore de manière préférée, la chemise comporte au moins deux doigts qui coopèrent avec au moins deux encoches ménagées sur l'écrou, les encoches étant centrées sur l'axe du mandrin et étant d'une longueur supérieure à celle des doigts de la chemise, cette longueur étant considérée dans le sens de l'arc de cercle suivant lequel s'étendent ces encoches.

Avantageusement, la différence de longueur entre les encoches de l'écrou et les doigts de la chemise est adaptée pour que dans la position déverrouillée de la chemise, les doigts sont en butée contre l'une des faces des encoches et le relief de la deuxième lame ressort est dans la première dépression, et que dans la position verrouillée de la chemise, les doigts sont en butée contre l'autre des faces des encoches et le relief de la deuxième lame ressort est dans la deuxième dépression.

En variante, les pattes de l'anneau s'étendent radialement et les parties complémentaires ménagées dans l'écrou comprennent au moins deux encoches.

Dans une autre variante, les pattes de l'anneau comprennent chacune une base qui s'étend transversalement par rapport au plan de l'anneau et deux pliures qui s'étendent depuis la base et sensiblement vers l'extérieur de l'anneau, les bases et les pliures étant emboîtées de manière élastique dans les encoches de l'écrou dans lesquelles pénètrent les doigts de la chemise.

D'autres caractéristiques et avantages de l'invention apparaîtront plus clairement à l'aide de la description qui suit, en référence aux dessins annexés représentant, à titre d'exemples non limitatifs, deux de ses formes d'exécution.

La figure 1 est une vue en perspective éclatée d'un premier mode de réalisation d'un mandrin selon la présente invention.

La figure 2 est une vue en coupe longitudinale du mandrin de la figure 1.

Les figures 3 et 4 sont des vues en coupe transversale respectivement selon les lignes III-III et IV-IV de la figure 2, le mandrin étant en position déverrouillée.

Les figures 5 et 6 sont des vues analogues à celles des figures 3 et 4, le mandrin étant en position verrouillée.

La figure 7 est une vue en perspective des moyens de verrouillage selon un deuxième mode de réalisation de la présente invention, prêt à être monté sur l'écrou.

La figure 8 est une vue partielle agrandie des moyens de verrouillage de la figure 7.

La figure 9 est une vue analogue à celle de la figure 3, d'un mandrin équipé des moyens de verrouillage représentés aux figures 7 et 8.

Le mandrin 1 représenté aux figures comprend un corps 2 de forme générale cylindrique possédant une paroi postérieure 3 dans laquelle débouche un trou taraudé 4 qui est destiné à permettre la fixation du mandrin sur un arbre fileté d'une machine tournante (non représentée aux figures).

Le corps 2 est symétrique autour d'un axe longitudinal X-X et s'étend entre la paroi postérieure 3 et une partie avant 5 dans laquelle est également ménagé un trou cylindrique dans lequel un outil tel qu'un foret est destiné à être réceptionné.

Dans le corps 2 sont ménagés trois alésages 8 d'axe Y-Y qui forme un angle aigu par rapport à l'axe longitudinal X-X du corps 2. Ces alésages servent chacun au guidage d'un mors 9 et convergent vers la partie avant 5 du corps 2, de telle sorte que le déplacement des mors vers l'avant se traduit par un rapprochement des mors entre eux pour permettre le serrage d'un outil (non représenté).

Par ailleurs, la partie extérieure des mors 9 possède, de manière connue en soi, un filetage 10 qui coopère avec un écrou taraudé 12 pour obtenir le déplacement des mors dans un sens ou dans l'autre dans les alésages 8, suivant le sens d'entraînement en rotation de l'écrou 12.

L'écrou 12 est formé d'un tronçon cylindrique avant 13 et d'un tronçon cylindrique arrière 14 qui sont tous les deux de même diamètre intérieur, le diamètre extérieur du tronçon arrière 14 étant supérieur au diamètre extérieur du tronçon avant 13. L'écrou 12 possède en outre une face avant 15 et une face arrière 16 appartenant toutes deux à un plan sensiblement transversal à l'axe X-X du corps 2. La jonction entre les tronçons avant 13 et le tronçon arrière 14 définit une surface 17 parallèle aux faces avant 15 et arrière 16.

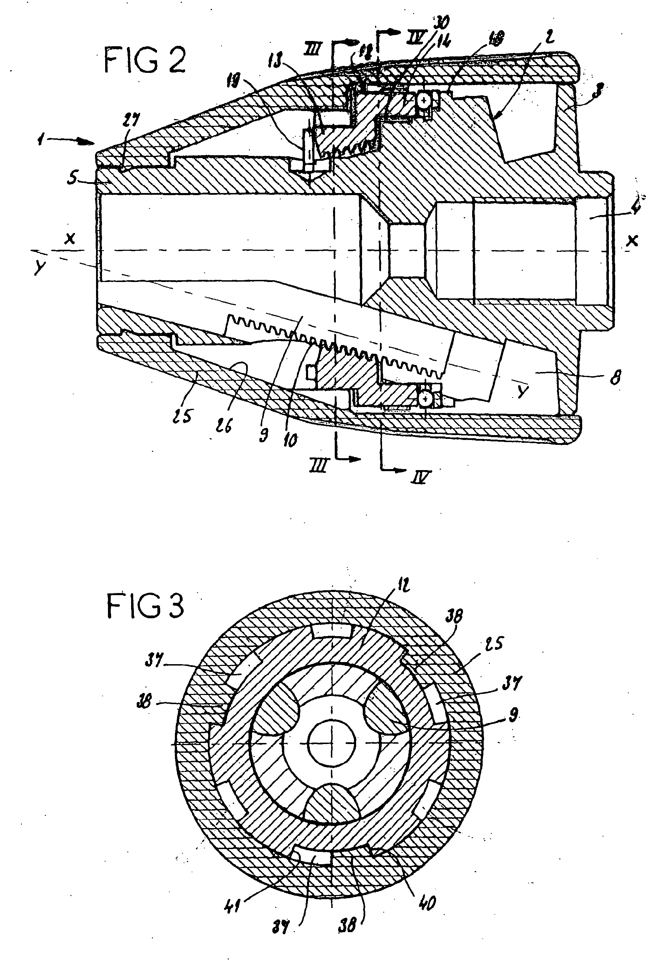

Comme le montre plus particulièrement la figure 2, le corps 2 possède un flasque 18 sur lequel l'écrou 12 vient en butée arrière suivant sa face arrière 16. Cet écrou 12 est bloqué axialement vers l'avant par un circlips 19. Afin de faciliter la rotation de l'écrou 12 sur le corps 2, une rondelle 20 et un anneau muni de billes de roulement 21 sont interposés entre la face arrière 16 de l'écrou 12 et le flasque 18.

Le mandrin 1 possède en outre une chemise 25 réalisée par exemple en matière synthétique qui est montée pivotante en rotation sur le corps 2 autour de l'axe X-X. Cette chemise 25 possède une paroi intérieure 26 qui coopère avec l'écrou 12 pour entraîner en rotation cet écrou. La chemise 25 s'étend sensiblement sur toute la longueur du corps 2, entre la paroi postérieure 3 et la partie avant 5. Cette chemise est bloquée axialement sur le corps 2 au moyen d'un encliquetage 27 situé en partie avant. Afin de faciliter la manipulation par un opérateur, la chemise 25 possède extérieurement un moletage 28.

Selon une caractéristique de l'invention, le corps 2 comprend, dans la zone recouverte par l'écrou 12, une denture périphérique 30 qui s'étend vers l'extérieur du mandrin et parallèlement à l'axe X-X du corps 2.

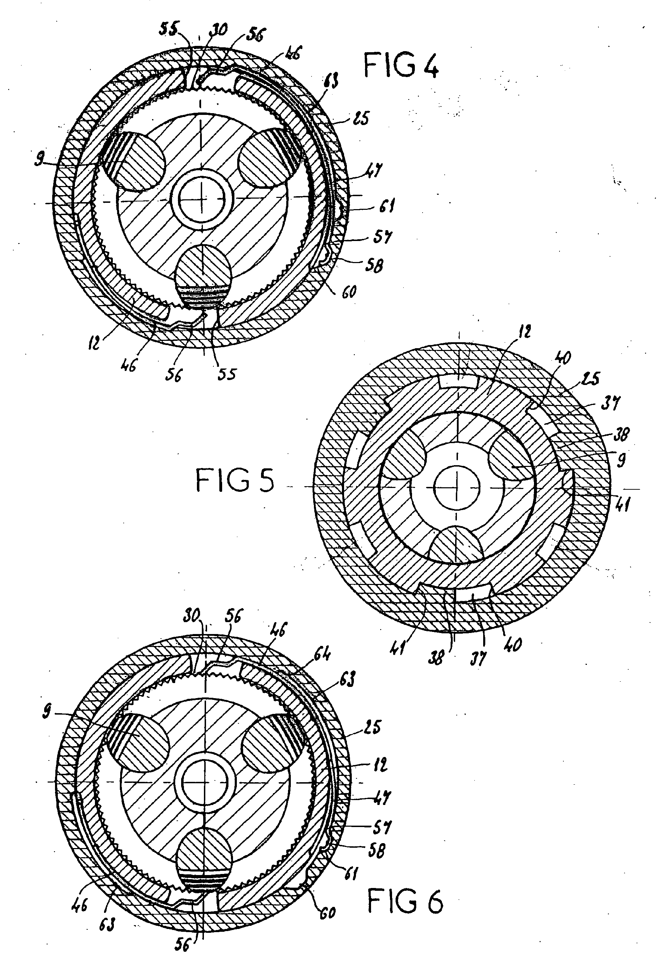

Selon une autre caractéristique essentielle de la présente invention, l'écrou 12 porte des moyens de verrouillage 35 qui sont destinés à être engagés dans la denture 30 du corps 2 lorsque le mandrin est en position serrée, et qui sont destinés à être actionnés par la chemise 25. Cette chemise possède un mouvement relatif angulaire par rapport aux moyens de verrouillage 35 entre une première position ou position déverrouillée (figures 3 et 4) dans laquelle la chemise 25 entraîne en rotation l'écrou 12 et une deuxième position ou position verrouillée (figures 5 et 6) dans laquelle le mandrin est dans sa position serrée.

Comme le montrent plus particulièrement les figures 3 et 5, l'écrou 12 possède de préférence trois encoches 37 qui sont régulièrement réparties angulairement et qui débouchent vers l'extérieur de l'écrou tout en étant centrées sur l'axe X-X du mandrin.

La paroi intérieure 26 de la chemise 25 possède de préférence trois doigts 38 qui font saillie vers l'intérieur du mandrin. La longueur des encoches 37 ménagées dans l'écrou 12 est supérieure à la longueur des doigts 38 de la chemise 25, considérée selon le sens de l'arc de cercle suivant lesquelles s'étendent les encoches 37. Ces encoches 37 sont délimitées latéralement par deux faces orientées sensiblement radialement 40 et 41.

Le mouvement relatif angulaire de la chemise 25 est ainsi limité par la venue en butée des doigts 38 contre la face radiale 40 des encoches 37, dans la position déverrouillée (figure 3), et contre la face radiale opposée 41 des encoches 37 dans la position verrouillée de la chemise (figure 5).

Les moyens de verrouillage 35 comprennent un anneau 45 à partir duquel s'étendent une première lame ressort 46 et une deuxième lame ressort 47. L'anneau 45 est monté solidaire en rotation sur l'écrou 12 et est fixé sur celui-ci au moyen de trois pattes 50 qui pénètrent dans des parties complémentaires ménagées dans l'écrou 12. De préférence, l'anneau 45 est appliqué contre la surface 17 de l'écrou 12.

Dans le premier mode de réalisation, les trois pattes 50 s'étendent radialement vers l'intérieur de l'anneau 45 est les parties complémentaires ménagées dans l'écrou 12 comprennent les trois encoches 37 dans lesquelles pénètrent également les doigts 38 de la chemise 25. Bien entendu en variante, les trois pattes 50 peuvent être logées dans des encoches distinctes des encoches 37.

Comme le montrent plus particulièrement les figures 4 et 6, la première lame ressort 46 et la deuxième lame ressort 47 s'étendent à l'opposé l'une de l'autre, au-dessus de la partie arrière 14 de l'écrou 12, en étant situées sur un arc de cercle centré sur l'axe X-X. La première lame ressort 46 possède une extrémité libre 56 qui est recourbée en direction du centre du mandrin en faisant saillie au travers d'un évidement traversant 55 ménagé dans l'écrou 12 pour atteindre, en position serrée du mandrin 1, la denture 30 du corps 2.

La deuxième lame ressort 47 possède une extrémité libre 57 qui possède un relief 58 tourné vers l'extérieur du mandrin pour coopérer respectivement dans les positions verrouillées et déverrouillées de la chemise 25, avec une première dépression 60 et une deuxième dépression 61 ménagées dans la paroi intérieure 26 de la chemise 25.

Par ailleurs, la chemise 25 comporte, dans sa paroi intérieure 26, une partie évidée 63 se terminant par une rampe 64 et dans laquelle l'extrémité libre 56 de la première lame ressort 46 est logée, dans la position déverrouillée de la chemise 25, pour dégager l'extrémité libre 56 hors de la denture 30 du corps 2, comme cela est représenté à la figure 4.

On comprend par ailleurs que la différence de longueur entre les encoches 37 de l'écrou 12 et les doigts 38 de la chemise 25 est adaptée pour que dans la position déverrouillée de la chemise, telle que représentée aux figures 3 et 4, les doigts 38 sont en butée contre la face radiale 40 des encoches 37 tandis que le relief 58 de la deuxième lame ressort 47 est logée dans la première dépression 60, alors que dans la position verrouillée de la chemise 25, telle que représentée aux figures 5 et 6, les doigts 38 de la chemise sont en butée contre l'autre face radiale 41 des encoches 37 tandis que le relief 58 de la deuxième lame ressort 57 est logé dans la deuxième dépression 61 de la chemise 25.

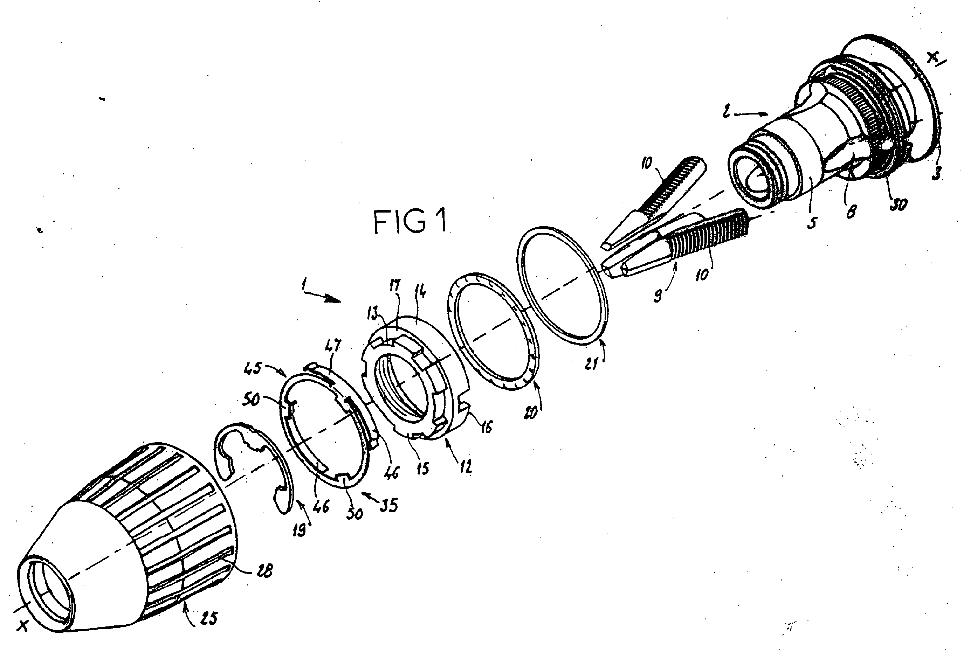

De préférence, comme cela est représenté à la figure 1, l'anneau 45 possède en outre une autre lame ressort identique à la première lame ressort 46 et située diamétralement opposée à cette lame ressort 46. Ainsi, la présence de deux lames ressort 46 décalées de 180° permet d'être certain qu'au moins l'une des extrémités libre de ces lames peut venir coopérer avec la denture 30 de l'écrou, sans risquer de d'être en regard d'une interruption de denture due aux alésages pour les mors.

On comprend ainsi qu'en position déverrouillée, telle que représentée aux figures 3 et 4, la chemise 25 entraîne en rotation l'écrou 12. Dans cette configuration, l'extrémité libre 56 ne coopère pas avec la denture 30 du corps 2 de sorte que les mors 9 sont librement entraînés en rotation sous l'action de la chemise 25.

Par contre, lorsque le mandrin est en position serrée, c'est-à-dire lorsque les mors entrent en contact avec l'outil inséré dans le mandrin, la résistance de l'écrou 12 à l'encontre de l'entraînement en rotation par la chemise 25 augmente. Il y a alors rotation de la chemise 25 par rapport à l'ensemble constitué par l'écrou 12 et les lames ressort 46 et 47. Cette rotation relative est limitée par la différence de longueur entre les doigts 38 de la chemise 25 et les encoches 37 de l'écrou 12. Les doigts 38 viennent alors en butée contre les faces radiales 41 des encoches 37 tandis que le relief 58, porté par la deuxième lame ressort 47 est dégagé, par un effet de flexion, hors de la première dépression 60 pour venir se loger dans la deuxième dépression 61. Simultanément, les extrémités libres 56 des premières lames ressort 46 sont infléchies vers l'intérieur du mandrin de sorte que ces extrémités libres coopèrent avec la denture 30 portée par le corps 2. Le serrage du mandrin peut alors se poursuivre jusqu'au maximum du couple applicable par l'opérateur avec un effet de cliquetis des lames ressort 46 sur la denture 30 du corps 2 qui est audible par l'opérateur. La coopération entre les extrémités libres 56 et la denture 30 évite tout déverrouillage intempestif par les vibrations provoquées lors d'une percussion.

Lorsque l'on veut retirer à nouveau l'outil hors du mandrin, il suffit d'entraîner la chemise 25 depuis sa position de verrouillage vers sa position de déverrouillage. La chemise 25 est alors entraînée en sens inverse au sens précédent, ce qui provoque le déplacement du relief 58 vers la première dépression 60 et le dégagement des extrémités libres 56 des premières lames ressort 46 hors de la denture 30. Les doigts 38 de la chemise 25 viennent à nouveau en butée contre la première face radiale 40 des encoches 37 portées par l'écrou 12. Toute rotation supplémentaire de la chemise 25 entraîne en rotation l'écrou 12 et donc le desserrage des mors.

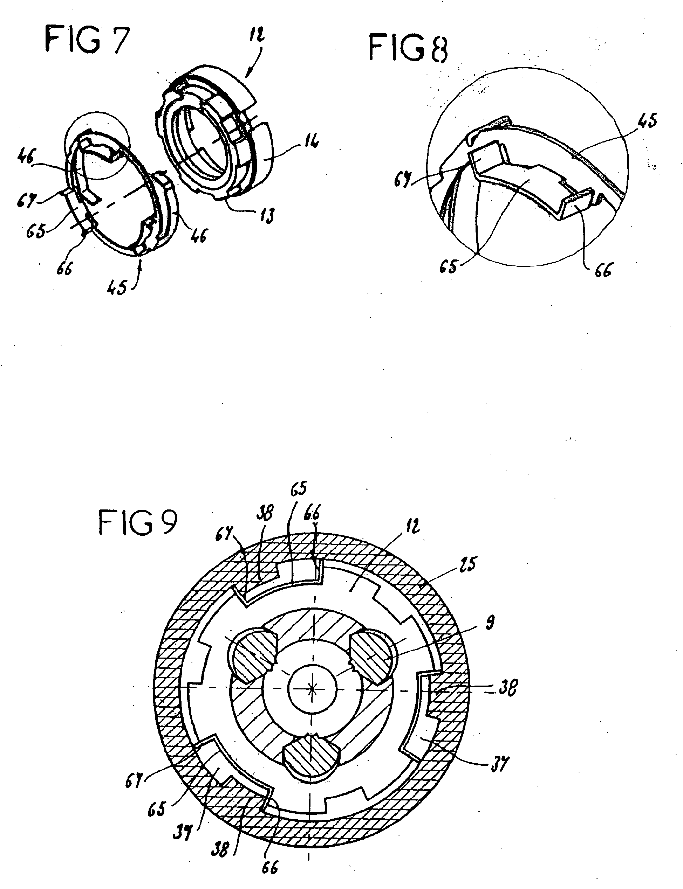

Le deuxième mode de réalisation représenté aux figures 7 à 9 diffère du premier mode de réalisation uniquement par la forme des pattes 50 qui immobilisent l'anneau 45 sur l'écrou 12. Les pattes 50 possèdent à présent une base 65 qui s'étend sensiblement transversalement par rapport au plan de l'anneau 45, ainsi que deux pliures 66 et 67 qui s'étendent depuis la base 65 en direction de l'extérieur de l'anneau 45. La base 65 et les pliures 66 et 67 sont de forme complémentaire à celle des encoches 37 ménagées dans l'écrou 12. Les doigts 38 de la chemise 25 sont donc maintenant en contact avec les pliures 66 et 67, la longueur des doigts 38 étant inférieure à la hauteur des pliures.

Le fonctionnement de l'ensemble est identique au fonctionnement décrit en regard du premier mode de réalisation.

Bien entendu, l'invention n'est pas limitée aux exemples décrits ci-dessus, et diverses modifications peuvent y être apportées sans sortir du cadre de la présente invention défini par les revendications.

## Revendications

1. Mandrin porte-outil pour l'équipement d'une machine tournante, telle qu'une perceuse, du type comprenant un corps (2) destiné à être fixé sur un arbre moteur de la machine, dans lequel sont montés plusieurs mors (9) qui coulissent dans des alésages (8) en convergeant vers l'avant et qui possèdent chacun une partie filetée (10) tournée vers l'extérieur, une chemise (25) étant montée pivotante sur le corps (2) et possédant une paroi intérieure (26) qui coopère avec un écrou (12) lui-même en prise avec la partie extérieure filetée (10) des mors (9), **caractérisé en ce que** le corps (2) comprend, dans sa zone recouverte par l'écrou (12), une denture périphérique (30), et l'écrou porte des moyens de verrouillage (35) qui sont destinés à être engagés dans la denture (30) du corps (2) en position serrée du mandrin, et qui sont destinés à être actionnés par la chemise (25), et **en ce que** la chemise (25) possède un mouvement relatif angulaire par rapport aux moyens de verrouillage (35) entre une position déverrouillée dans laquelle la chemise (25) entraîne en rotation l'écrou (12) et une position verrouillée dans laquelle le mandrin (1) est dans sa position serrée.

2. Mandrin selon la revendication 1, **caractérisé en ce** les moyens de verrouillage (35) comprennent au moins une première lame ressort (46) qui est montée fixe angulairement sur l'écrou (12) et qui possède une extrémité libre (56) faisant saillie au travers d'un évidement (55) ménagé dans l'écrou (12) pour atteindre, en position serrée du mandrin (1), la denture (30) du corps (2).

3. Mandrin selon la revendication 2, **caractérisé en ce que** les moyens de verrouillage comprennent au moins une deuxième lame ressort (47) qui possède une extrémité libre (57) munie d'un relief (58) qui coopère respectivement dans les positions déverrouillée et verrouillée de la chemise (25), avec une première (60) et une deuxième (61) dépressions ménagées dans la chemise (25).

4. Mandrin selon la revendication 3, **caractérisé en ce que** les première (46) et deuxième (47) lames ressort sont solidaires d'un anneau (45) porté par l'écrou (12) et immobilisé en rotation sur cet écrou (12) au moyen d'au moins deux pattes (50) qui pénètrent dans des parties complémentaires ménagées dans l'écrou (12).

5. Mandrin selon l'une quelconque des revendications 2 à 4, **caractérisé en ce que** la chemise (25) comprend au moins une partie évidée (63) dans laquelle l'extrémité libre (56) de la première lame ressort (46) est logée, dans la position déverrouillée de la chemise (25), pour dégager cette extrémité libre (56) hors de la denture (30) du corps (2).

6. Mandrin selon l'une quelconque des revendications 2 à 5, **caractérisé en ce que** la chemise (25) comporte au moins deux doigts (38) qui coopèrent avec au moins deux encoches (37) ménagées sur l'écrou (12), les encoches (37) étant centrées sur l'axe (X-X) du mandrin (1) et étant d'une longueur supérieure à celle des doigts (38) de la chemise (25), cette longueur étant considérée dans le sens de l'arc de cercle suivant lequel s'étendent ces encoches.

7. Mandrin selon la revendication 6, **caractérisé en ce que** la différence de longueur entre les encoches (37) de l'écrou (12) et les doigts (38) de la chemise (25) est adaptée pour que dans la position déverrouillée de la chemise (25), les doigts (38) sont en butée contre l'une (40) des faces des encoches (37) et le relief (58) de la deuxième lame ressort (46) est dans la première dépression (60), et que dans la position verrouillée de la chemise (25), les doigts (38) sont en butée contre l'autre (41) des faces des encoches (37) et le relief (58) de la deuxième lame ressort (47) est dans la deuxième dépression (61).

8. Mandrin selon l'une quelconque des revendications 4 à 7, **caractérisé en ce que** les pattes (50) de l'anneau (45) s'étendent radialement et les parties complémentaires ménagées dans l'écrou (12) comprennent au moins deux encoches (37).

9. Mandrin selon l'une quelconque des revendications 4 à 7, **caractérisé en ce que** les pattes (50) de l'anneau (45) comprennent chacune une base (65) qui s'étend transversalement par rapport au plan de l'anneau (45) et deux pliures (66, 67) qui s'étendent depuis la base (65) et sensiblement vers l'extérieur de l'anneau (45), les bases (65) et les pliures (66, 67) étant emboîtées de manière élastique dans les encoches (37) de l'écrou dans lesquelles pénètrent les doigts (38) de la chemise (25).

## Claims

1. Chuck for equipping a rotary machine such as a drill, of the type comprising a body (2) intended to be fixed to a drive shaft of the machine, in which there are mounted several jaws (9) which slide in bores (8) converging forwards and which each have an outwardly facing threaded part (10), a sleeve (25) being pivotably mounted on the body (2) and having an interior wall (26) which collaborates with a nut (12) itself engaged with the threaded exterior part (10) of the jaws (9), **characterized in that** the body (2) comprises, in its region covered by the nut (12), a peripheral set of teeth (30) and the nut bears locking means (35) which are intended to engage in the set of teeth (30) of the body (2) when the chuck is in the tightened position, and which are intended to be activated by the sleeve (25), and **in that** the sleeve (25) has an angular relative movement with respect to the locking means (35) between an unlocked position in which the sleeve (25) turns the nut (12) and a locked position in which the chuck (1) is in its tightened position.

2. Chuck according to Claim 1, **characterized in that** the locking means (35) comprise at least one first spring leaf (46) which is mounted angularly fixedly on the nut (12) and which has a free end (56) projecting through an opening (55) made in the nut (12) so that when the chuck (1) is in the tightened position it reaches the set of teeth (30) of the body (2).

3. Chuck according to Claim 2, **characterized in that** the locking means comprise at least one second spring leaf (47) which has a free end (57) equipped with a relief (58) which collaborates, in the unlocked and locked positions of the sleeve (25) respectively, with a first depression (60) and with a second depression (61) which are formed in the sleeve (25).

4. Chuck according to Claim 3, **characterized in that** the first (46) and second (47) spring leaves are secured to a ring (45) borne by the nut (12) and prevented from rotating on this nut (12) by means of at least two tabs (50) which enter complementary parts formed in the nut (12).

5. Chuck according to any one of Claims 2 to 4, **characterized in that** the sleeve (25) comprises at least one hollowed-out part (63) in which the free end (56) of the first spring leaf (46) is housed, when the sleeve (25) is in the unlocked position, so as to disengage this free end (56) from the set of teeth (30) of the body (2).

6. Chuck according to any one of Claims 2 to 5, **characterized in that** the sleeve (25) comprises at least two fingers (38) which collaborate with at least two notches (37) formed on the nut (12), the notches (37) being centred on the axis (X-X) of the chuck (1) and being longer than the fingers (38) of the sleeve (25), this length being considered in the direction of the circular arc over which these notches extend.

7. Chuck according to Claim 6, **characterized in that** the difference in length between the notches (37) of the nut (12) and the fingers (38) of the sleeve (25) is tailored so that when the sleeve (25) is in the unlocked position, the fingers (38) are in abutment against one (40) of the faces of the notches (37) and the relief (58) of the second spring leaf (46) is in the first depression (60), and so that when the sleeve (25) is in the locked position the fingers (38) are in abutment against the other (41) of the faces of the notches (37) and the relief (58) of the second spring leaf (47) is in the second depression (61).

8. Chuck according to any one of Claims 4 to 7, **characterized in that** the tabs (50) of the ring (45) extend radially and the complementary parts formed in the nut (12) comprise at least two notches (37).

9. Chuck according to any one of Claims 4 to 7, **characterized in that** the tabs (50) of the ring (45) each comprise a base (65) extending transversely with respect to the plane of the ring (45) and two bends (66, 67) which extend from the base (65) and more or less toward the outside of the ring (45), the bases (65) and the bends (66, 67) nesting elastically in the notches (37) of the nut into which notches the fingers (38) of the sleeve (25) penetrate.

## Patentansprüche

1. Werkzeugspannfutter zur Ausrüstung einer drehenden Maschine, insbesondere einer Bohrmaschine, mit einem Körper (2), der auf einer Motorwelle der Maschine befestigt werden soll und in dem mehrere Spannbacken (9) angebracht sind, die in nach vorne konvergierenden Bohrungen (8) gleiten, welche jeweils einen nach außen weisenden Gewindeteil (10) aufweisen, wobei eine Buchse (25) schwenkbar an dem Körper (2) angebracht ist, die eine Innenwand (26) aufweist, welche mit einer Mutter (12) zusammenwirkt, die wiederum mit dem Gewindeaußenteil (10) der Spannbacken (9) in Eingriff steht, **dadurch gekennzeichnet, dass** der Körper (2) in seinem durch die Mutter (12) bedeckten Bereich eine Umfangsverzahnung (30) umfasst und die Mutter Verriegelungsmittel (35) aufweist, die in der Spannposition des Spannfutters in der Verzahnung (30) des Körpers (2) in Eingriff gelangen sollen und die durch die Buchse (25) betätigt werden sollen, und dass die Buchse (25) eine winkelförmige Relativbewegung bezüglich der Verriegelungsmittel (35) zwischen einer entriegelten Position, in der die Buchse (25) die Mutter (12) in Drehung versetzt, und einer verriegelten Position, in der sich das Spannfutter (1) in seiner gespannten Position befindet, besitzt.

2. Spannfutter nach Anspruch 1, **dadurch gekennzeichnet, dass** die Verriegelungsmittel (35) mindestens eine erste Blattfeder (46) umfassen, die winkelfest an der Mutter (12) angebracht ist und ein freies Ende (56) aufweist, das durch eine in der Mutter (12) ausgebildete Aussparung (55) vorragt, um in der gespannten Position des Spannfutters (1) die Verzahnung (30) des Körpers (2) zu erreichen.

3. Spannfutter nach Anspruch 2, **dadurch gekennzeichnet, dass** die Verriegelungsmittel mindestens eine zweite Blattfeder (47) umfassen, die ein freies Ende (57) aufweist, das mit einer Erhöhung (58) versehen ist, die in der entriegelten bzw. verriegelten Position der Buchse (25) mit einer ersten (60) und zweiten (61) Vertiefung, die in der Buchse (25) ausgebildet sind, zusammenwirkt.

4. Spannfutter nach Anspruch 3, **dadurch gekennzeichnet, dass** die erste (46) und die zweite (47) Blattfeder fest mit einem Ring (45) verbunden sind, der an der Mutter (12) vorgesehen und durch zwei Nasen (50), die in in der Mutter (12) ausgebildete komplementäre Teile eintreten, drehfest an dieser Mutter (12) angebracht ist.

5. Spannfutter nach einem der Ansprüche 2 bis 4, **dadurch gekennzeichnet, dass** die Buchse (25) mindestens einen ausgesparten Teil (63) umfasst, in dem in der entriegelten Position der Buchse (25) das freie Ende (56) der ersten Blattfeder (46) untergebracht wird, um dieses freie Ende (56) aus der Verzahnung (30) des Körpers (2) freizugeben.

6. Spannfutter nach einem der Ansprüche 2 bis 5, **dadurch gekennzeichnet, dass** die Buchse (25) mindestens zwei Finger (38) aufweist, die mit mindestens zwei in der Mutter (12) ausgebildeten Kerben (37) zusammenwirken, wobei die Kerben (37) auf der Achse (X-X) des Dorns (1) zentriert sind und eine größere Länge als die der Finger (38) der Buchse (25) aufweisen, wobei diese Länge in Kreisbogenrichtung, entlang der sich diese Kerben erstrecken, betrachtet wird.

7. Spannfutter nach Anspruch 6, **dadurch gekennzeichnet, dass** der Längenunterschied zwischen den Kerben (37) der Mutter (12) und den Fingern (38) der Buchse (25) so ausgelegt ist, dass in der entriegelten Position der Buchse (25) die Finger (38) an einer (40) der Flächen der Kerben (37) anstoßen und sich die Erhöhung (58) der zweiten Blattfeder (46) in der ersten Vertiefung (60) befindet und dass in der verriegelten Position der Buchse (25) die Finger (38) an der anderen (41) der Flächen der Kerben (37) anstoßen und sich die Erhöhung (58) der zweiten Blattfeder (47) in der zweiten Vertiefung (61) befindet.

8. Spannfutter nach einem der Ansprüche 4 bis 7, **dadurch gekennzeichnet, dass** sich die Nasen (50) des Rings (45) radial erstrecken und die in der Mutter (12) ausgebildeten komplementären Teile mindestens zwei Kerben (37) aufweisen.

9. Spannfutter nach einem der Ansprüche 4 bis 7, **dadurch gekennzeichnet, dass** die Nasen (50) des Rings (45) jeweils eine Basis (65), die sich quer zur Ebene des Rings (45) erstreckt, und zwei Falze (66, 67), die sich von der Basis (65) aus im Wesentlichen zum Äußeren des Rings (45) erstrecken, aufweisen, wobei die Basen (65) und die Falze (66, 67) elastisch in die Kerben (37) der Mutter, in die die Finger (38) der Buchse (25) eintreten, eingreifen.
